# FASCICULE DE BREVET EUROPEEN

(11) **EP 0 564 323 B1**
(45) Date de publication et mention de la délivrance du brevet: **22.05.1996**
(21) Numéro de dépôt: 93400737.8
(22) Date de dépôt: 22.03.1993
(51) Int. Cl.: G21D 1/02, F22B 37/24

(54) **Dispositif de maintien transversal d'un composant de grande dimension d'un réacteur nucléaire, et son procédé de réglage**
Vorrichtung zur seitlichen Halterung einer grossen Kernreaktorkomponente und Verfahren zum Einstellen der Halterung
Device for laterally supporting a large nuclear reactor component and method for adjusting the support

(30) Priorité: 31.03.1992 FR 9203897
(43) Date de publication de la demande: 06.10.1993
(73) Titulaire: FRAMATOME, F-92400 Courbevoie (FR)
(72) Inventeur: Brouttelande, Serge, F-95120 Ermont (FR)
(74) Mandataire: Bouget, Lucien

(56) Documents cités:
- EP-A- 0 079 048
- EP-A- 0 391 060
- DE-B- 2 424 518
- US-A- 3 795 139

## Description

L'invention concerne un dispositif de maintien transversal d'un composant de grandes dimensions d'un réacteur nucléaire, tel qu'un générateur de vapeur, et un procédé de réglage d'un ensemble de maintien du composant.

Les générateurs de vapeur des réacteurs nucléaires refroidis par de l'eau sous pression sont des composants de grandes dimensions comportant une enveloppe de forme générale cylindrique, placée avec son axe vertical, dans une disposition latérale par rapport à la cuve du réacteur nucléaire renfermant le coeur, à l'intérieur d'une structure fixe en béton comportant des parois verticales, appelée casemate.

Chacun des générateurs de vapeur est placé sur une boucle du circuit primaire du réacteur nucléaire constituée par des canalisations de grand diamètre reliant la cuve à la partie primaire du générateur de vapeur. Une de ces canalisations ou branche chaude assure une liaison directe entre la cuve et la partie d'entrée de la boîte à eau du générateur de vapeur assurant la distribution d'eau sous pression de refroidissement du réacteur dans les tubes du faisceau du générateur de vapeur contenus à l'intérieur de l'enveloppe.

Une seconde canalisation ou branche intermédiaire relie la partie de sortie de la boîte à eau du générateur de vapeur à une pompe primaire assurant la circulation de l'eau de refroidissement dans la boucle du circuit primaire.

La pompe primaire est reliée à la cuve du générateur de vapeur, de manière à renvoyer l'eau de refroidissement refroidie dans le générateur de vapeur à l'intérieur de la cuve, par une troisième canalisation appelée branche froide.

Le générateur de vapeur repose, à l'intérieur de la casemate en béton, sur des béquilles articulées verticales reliées à leur partie inférieure à des plaques de support scellées dans une dalle en béton constituant le fond de la casemate.

De plus, le générateur de vapeur est maintenu à l'intérieur de la casemate par un ensemble de tirants et d'amortisseurs intercalés entre les parois verticales de la casemate et un anneau de maintien de l'enveloppe du générateur de vapeur situé au voisinage de la partie médiane du générateur de vapeur, entre son extrémité inférieure constituant la paroi de la boîte à eau et son extrémité supérieure par où sort la vapeur produite à l'intérieur du générateur.

Le générateur de vapeur comporte également des dispositifs de maintien transversal ou butées assurant le guidage du générateur de vapeur et son maintien en cas d'accident, disposés au voisinage du fond primaire du générateur de vapeur constituant la paroi de la boîte à eau.

L'ensemble de maintien transversal du générateur de vapeur comporte généralement deux butées latérales placées dans des positions symétriques par rapport au plan vertical contenant l'axe de la branche chaude et une butée frontale dont la zone de contact avec le générateur de vapeur se situe au voisinage du plan vertical contenant l'axe de la branche chaude et dans une position opposée par rapport à la branche chaude reliée à la boîte à eau.

Les butées de maintien du générateur de vapeur comportent un élément d'appui destiné à venir au contact ou à proximité d'une surface d'appui du générateur de vapeur qui peut être constituée soit par le fond primaire du générateur, c'est-à-dire la surface extérieure de la boîte à eau, soit par la surface latérale externe de la plaque tubulaire sur laquelle est fixé le faisceau de tubes du générateur de vapeur et qui assure la jonction entre la boîte à eau et l'enveloppe du générateur de vapeur, soit encore par un anneau mécanosoudé ceinturant la partie inférieure du générateur de vapeur.

Les dispositifs de maintien comportent chacun une semelle ancrée dans le béton de l'une des parois de la casemate à laquelle est relié l'élément d'appui de la butée qui peut être constitué par une seconde semelle fixée sur la première dans une disposition parallèle avec un certain écartement.

Généralement, un système absorbeur d'énergie est intercalé entre les deux semelles, de manière à amortir les chocs ou l'énergie liée au déplacement du générateur de vapeur en cas d'accident.

Ces absorbeurs d'énergie peuvent être constitués par des "coussins" en fils d'acier inoxydable.

Dans le cas de la butée frontale, le système d'absorption d'énergie est généralement constitué par plusieurs rangées de barres d'acier disposées parallèlement les unes aux autres dans chacune des rangées et dans des dispositions perpendiculaires d'une rangée sur l'autre et en quinconce, de manière à absorber l'énergie par déformation ou flexion, dans le cas d'un déplacement accidentel du générateur de vapeur en direction de la paroi correspondante de la casemate.

Lors de la mise en place du générateur de vapeur dans la casemate, les butées assurant le maintien transversal de sa partie inférieure doivent être réglées, de manière qu'il subsiste un jeu parfaitement défini entre l'élément d'appui de chacune des butées et la surface d'appui correspondante du générateur de vapeur.

Les jeux sont définis en fonction des déplacements prévisibles du générateur de vapeur, en fonctionnement normal et lors d'un accident dû à une cause interne au réacteur nucléaire, par exemple à une rupture de tuyauterie primaire ou de vapeur ou à une cause totalement extérieure au réacteur nucléaire, telle qu'un séisme.

Les jeux sont variables en fonction des butées, dans la mesure où les déplacements du générateur de vapeur ne sont pas identiques dans toutes les directions.

L'élément d'appui de la butée frontale est ainsi disposé généralement à une distance importante, de l'ordre de 50 mm de la surface du générateur de vapeur, les mouvements du générateur de vapeur dans l'axe de la branche chaude ayant une ampleur relativement importante. Du fait de ce jeu important, les butées frontales ne viennent pas en contact avec le générateur de vapeur et ne participent pas au maintien du générateur de vapeur en cas de séisme.

Les butées latérales disposées du côté du plan de symétrie de la branche chaude sur lequel sont situés la branche intermédiaire et le groupe motopompe primaire doivent être disposées avec un jeu nul par rapport à la surface d'appui du générateur de vapeur. On assure ainsi le guidage du générateur de vapeur par rapport à cette référence, aussi bien pendant le fonctionnement normal du générateur de vapeur qu'en cas d'accident.

Les autres butées latérales situées dans une position symétrique par rapport au plan axial de la branche chaude comportent des éléments d'appui disposés avec un certain jeu par rapport à la surface du générateur de vapeur.

Le réglage des butées constituant l'opération de calage du générateur de vapeur doit être effectué lors du montage de tout générateur neuf dans une centrale nucléaire, qu'il s'agisse d'un générateur destiné à une centrale neuve avant sa mise en service ou d'un générateur de vapeur de remplacement destiné à un réacteur nucléaire ayant fonctionné pendant une période plus ou moins longue.

Le réglage des jeux des différentes butées est réalisé en fixant des cales d'épaisseur appropriée sur une semelle externe de la butée dirigée vers le générateur de vapeur et reliée à la semelle fixe ancrée dans le béton de la paroi de la casemate. La semelle externe et les cales constituent dans ce cas l'élément d'appui de la butée destiné à venir en contact avec la surface d'appui du générateur de vapeur.

Le calage du générateur de vapeur est effectué en plusieurs phases.

Lors des essais à chaud du réacteur nucléaire, le fluide primaire étant à 155 bars et 286°C pendant ces essais, ce qui correspond aux conditions nominales de fonctionnement du réacteur, on réalise une mise en place et un préréglage des butées inférieures latérales et frontales du générateur de vapeur et on mesure les jeux entre le générateur de vapeur et les semelles externes des butées qui ne comportent pas de cales dans cette phase.

Les valeurs mesurées des jeux pendant les essais à chaud du générateur de vapeur sont transmises au service d'étude du constructeur du réacteur nucléaire.

Les épaisseurs des cales nécessaires sont calculées en fonction des jeux mesurés et des déplacements d'origine thermique du générateur de vapeur qui sont calculés.

Des cales préfabriquées sont marquées en fonction de leur destination et équipées de moyens de levage pour permettre leur manutention.

Les cales sont ensuite percées, usinées à leurs dimensions définitives, contrôlées et livrées sur le site du réacteur nucléaire. Les cales qui sont identifiées sur le site sont mises en place et fixées soit par des vis, soit par soudure, dans la casemate du générateur de vapeur, le circuit primaire étant à basse température.

Il est nécessaire d'effectuer les opérations décrites ci-dessus sur un ensemble d'une trentaine de cales, pour assurer le calage d'un générateur de vapeur, chacune des butées latérales et la butée frontale nécessitant la présence de dix cales pour assurer son réglage.

Ces opérations sont donc longues et complexes, ce qui présente des inconvénients, surtout dans le cas du remplacement d'un générateur de vapeur usagé. En effet, dans ce cas, il est nécessaire de réduire au maximum le temps nécessaire pour le remplacement du générateur de vapeur et le temps d'arrêt total du réacteur nucléaire.

Un ensemble de maintien pourvu de telles cales est représenté sur la figure 4 de DE-A-2424518. On connaît en outre de EP-A-0391060 un ensemble de maintien dans lequel une unique butée est dôtée de moyens de compensation, tel qu'un ensemble de cames ou un système à levier.

Le but de l'invention est donc de proposer un dispositif de maintien transversal d'un composant de grandes dimensions d'un réacteur nucléaire tel qu'un générateur de vapeur d'un réacteur nucléaire à eau sous pression, disposé dans une structure fixe en béton ayant des parois verticales entourant le composant, comportant au moins une semelle fixée sur une paroi de la structure en béton et un élément d'appui porté par la semelle et pouvant être disposé au contact ou à proximité d'une surface d'appui du composant, ce dispositif permettant d'effectuer le réglage de l'élément d'appui sans utiliser de cales de dimensions ajustées.

Dans ce but, le dispositif comporte un ensemble de réglage et de positionnement de l'élément d'appui constitué par :
- un écrou porté par la semelle fixe traversé suivant son axe par une ouverture taraudée,
- une vis-vérin en prise avec l'écrou et disposée dans la direction axiale, et
- un moyen de blocage de la vis par rapport à l'écrou dans une position déterminée de la vis, dans la direction axiale,
- l'élément d'appui étant constitué par un patin porté par une extrémité de la vis dirigée vers la surface d'appui du composant.

L'invention est également relative à un ensemble de maintien transversal d'un composant de grandes dimensions d'un réacteur nucléaire et à son procédé de réglage.

Afin de bien faire comprendre l'invention, on va maintenant décrire, à titre d'exemple non limitatif, en se référant aux figures jointes en annexe, un mode de réalisation d'un dispositif et d'un ensemble de maintien transversal suivant l'invention d'un générateur de vapeur d'un réacteur nucléaire à eau sous pression.

La figure 1 est une vue en élévation et en coupe partielle d'un générateur de vapeur comportant des moyens de supportage et de maintien suivant l'art antérieur.

La figure 2 est une vue en coupe transversale de la partie inférieure d'un générateur de vapeur montrant un ensemble de maintien transversal du générateur, suivant l'invention.

La figure 3 est une vue en coupe par un plan horizontal, d'un dispositif de maintien transversal du générateur de vapeur, suivant l'invention.

La figure 4 est une vue en perspective éclatée du dispositif de maintien transversal représenté sur la figure 3.

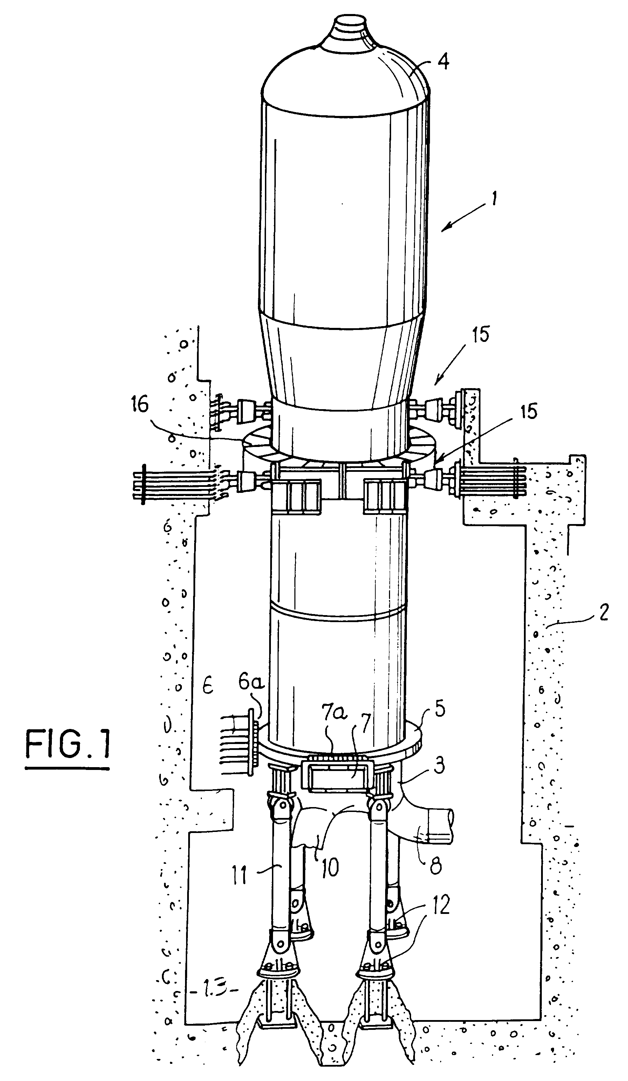

Sur la figure 1, on voit un générateur de vapeur d'un réacteur nucléaire à eau sous pression désigné de manière générale par le repère 1, de forme générale cylindrique et disposé à l'intérieur d'une casemate 2 comportant des parois latérales et constituant une partie du bâtiment du réacteur nucléaire placée latéralement par rapport au puits de cuve du réacteur dans lequel est disposée la cuve renfermant le coeur constitué par des assemblages combustibles.

Le générateur de vapeur 1 comporte une enveloppe constituée par un ensemble de viroles cylindriques et d'une virole tronconique soudées bout à bout, l'enveloppe étant en outre fermée à ses extrémités par deux fonds bombés 3 et 4 de forme sensiblement hémisphérique.

Le fond bombé inférieur 3 constitue la boîte à eau du générateur de vapeur par l'intermédiaire de laquelle l'eau de refroidissement sous pression du réacteur nucléaire est répartie et mise en circulation à l'intérieur des tubes du faisceau disposés à l'intérieur de l'enveloppe cylindrique puis récupérée après avoir circulé dans les tubes du faisceau.

La boîte à eau 3 est reliée à l'enveloppe cylindrique du générateur de vapeur, par l'intermédiaire d'une plaque tubulaire de forte épaisseur dans laquelle sont fixés les tubes du faisceau par leurs extrémités.

Au niveau de la plaque tubulaire, un anneau mécanosoudé 5 est fixé dans une disposition coaxiale autour de la surface externe du générateur de vapeur 1. La surface périphérique externe de l'anneau mécanosoudé 5 constitue la surface d'appui des dispositifs de maintien transversal tels que 6 et 7 de la partie inférieure du générateur de vapeur.

La boîte à eau 3 du générateur de vapeur est reliée à la cuve du réacteur, directement par l'intermédiaire d'une canalisation 8 constituant la branche chaude de la boucle du circuit primaire sur laquelle est disposé le générateur de vapeur 1. L'eau sous pression de refroidissement du réacteur pénètre dans la boîte à eau 3 par la branche chaude 8, après s'être échauffée au contact des assemblages du coeur, à l'intérieur de la cuve.

La boîte à eau 3 est également reliée à une canalisation 10 constituant la branche intermédiaire de la boucle du circuit primaire sur laquelle est placée la pompe primaire de circulation du fluide de refroidissement non représentée.

Le générateur de vapeur 1 repose sur des béquilles articulées 11, par l'intermédiaire de chapes d'appui boulonnées sur un anneau 5 solidaire de la plaque tubulaire.

Les béquilles articulées 11 disposées verticalement sont reliées à leur partie inférieure chacune à une plaque d'appui 12 scellée dans une dalle 13 constituant le fond de la casemate 2 reposant sur le radier du réacteur nucléaire.

Le générateur de vapeur 1 est maintenu transversalement, c'est-à-dire dans des directions horizontales, par des ensembles de maintien 15 comportant des tirants et des amortisseurs reliés à un anneau mécanosoudé 16 fixé autour de l'enveloppe du générateur de vapeur.

Le maintien transversal du générateur de vapeur est assuré à sa partie inférieure, par les dispositifs de maintien transversal ou butées 6 et 7 qui sont fixés sur les parois verticales de la casemate 2, au niveau de l'anneau 5.

La butée 6 ou butée frontale comporte une partie d'appui 6a placée en vis-à-vis d'une zone de la surface d'appui de l'anneau 5 disposée au voisinage d'un plan vertical contenant l'axe de la branche chaude 8 et en un emplacement situé à l'opposé de la branche chaude 8, par rapport à l'axe du générateur de vapeur.

Des butées latérales telles que la butée 7 sont disposées de part et d'autre du plan vertical contenant l'axe de la branche chaude 8, de manière sensiblement symétrique par rapport à ce plan.

Dans le cas d'un dispositif de maintien transversal inférieur du générateur de vapeur selon l'art antérieur tel que représenté sur la figure 1, un jeu important est ménagé, lors du réglage de l'ensemble de maintien, au cours du montage du générateur de vapeur, entre la partie d'appui 6a de la butée frontale 6 et la surface d'appui de l'anneau 5.

La partie d'appui 7a de la butée latérale 7 disposée du côté de la branche intermédiaire 10 et du groupe motopompe primaire, par rapport au plan contenant l'axe de la branche chaude, est disposée, lors du régalge, au contact de la surface d'appui de l'anneau 5, de manière à assurer le guidage du générateur de vapeur 1, lors de ses déplacements sous l'effet des dilatations.

La seconde butée latérale (qui n'est pas visible sur la figure 1) est placée avec un certain jeu par rapport à la surface d'appui de l'anneau 5.

Les réglages de jeu des butées latérales et frontales sont réalisés, comme indiqué précédemment, lors des essais à chaud du réacteur nucléaire, en usinant un ensemble de cales dont les dimensions sont définies par des mesures de jeu résiduel réalisées lorsque le générateur de vapeur est à sa température de service.

Un tel procédé de réglage des dispositifs de maintien transversal suivant l'art antérieur nécessite de nombreuses opérations successives pour la réalisation et la pose des cales, ce qui accroît la durée nécessaire pour le montage d'un générateur de vapeur dans l'enceinte du réacteur. Cette durée est particulièrement critique dans le cas du montage d'un générateur de vapeur de remplacement.

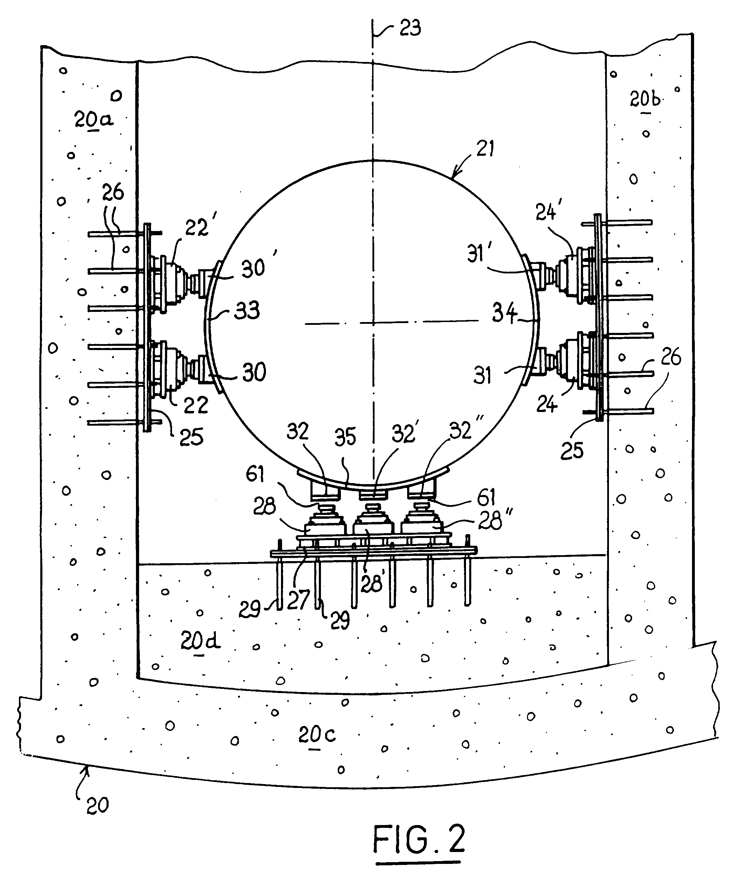

Sur la figure 2, on a représenté un ensemble de maintien transversal de la partie inférieure d'un générateur de vapeur comportant des dispositifs de maintien réglables suivant l'invention.

Sur la figure 2, on voit la partie inférieure du générateur de vapeur 21 à l'intérieur de la casemate 20 qui comporte des parois verticales latérales 20a et 20b et une paroi frontale 20c en forme de portion de cylindre.

L'ensemble de maintien transversal de la partie inférieure du générateur de vapeur 1 comporte deux butées latérales 22 et 22' situées d'un premier côté du plan de symétrie vertical 23 contenant l'axe de la branche chaude du générateur de vapeur 21 et deux butées latérales 24 et 24' situées dans une position sensiblement symétrique des butées 22 et 22' par rapport au plan 23.

Les paires de butées 22, 22' et 24, 24' sont fixées par l'intermédiaire d'une plaque de support 25 et d'éléments de scellement 26, sur la surface intérieure de la paroi 20a de la casemate 20.

L'ensemble de maintien transversal de la partie inférieure du générateur de vapeur 21 comporte également trois butées frontales 28, 28' et 28'' fixées par l'intermédiaire d'une plaque de support 27 et de tirants de scellement 29, sur un bloc d'appui 20d rapporté contre la paroi 20c de la casemate 20.

Les butées 22, 22', 24, 24', 28, 28' et 28'' sont toutes identiques et constituées par des dispositifs de maintien réglables suivant l'invention qui seront décrits plus loin.

Les butées latérales et frontales 22, 22', 24, 24', 28, 28', 28'' sont disposées à proximité ou au contact de blocs d'appui respectivement 30, 30', 31, 31', 32, 32', 32'' fixés contre la surface extérieure de l'enveloppe du générateur de vapeur 21.

Les blocs d'appui 30 et 30' sont fixées sur l'enveloppe du générateur de vapeur par l'intermédiaire d'une semelle en forme de portion de cylindre 33. De même, les blocs d'appui 31 et 31' sont fixés sur l'enveloppe du générateur de vapeur par l'intermédiaire d'une semelle 34 et les blocs 32, 32' et 32'' par l'intermédiaire d'une semelle 35.

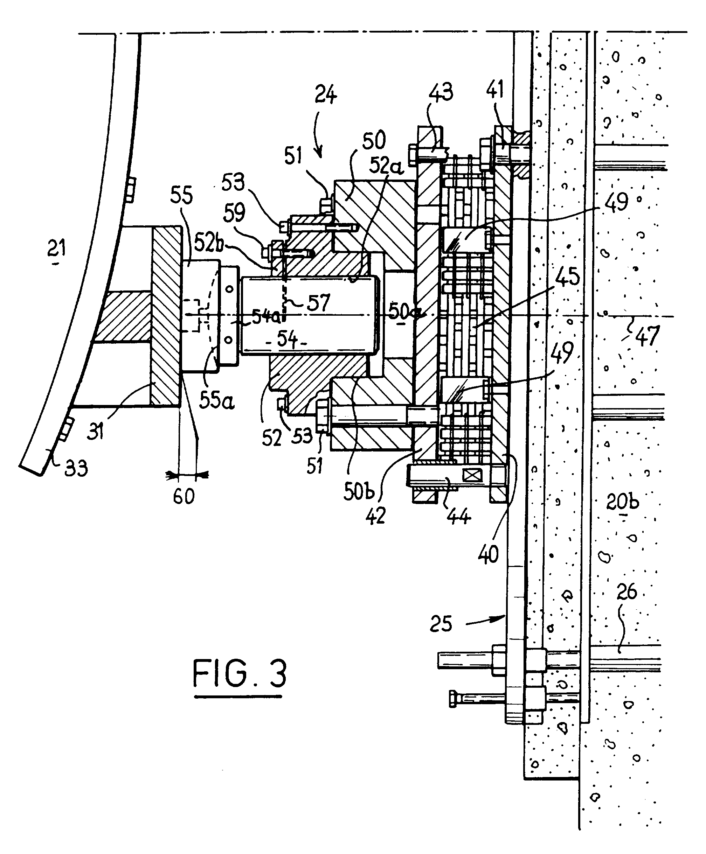

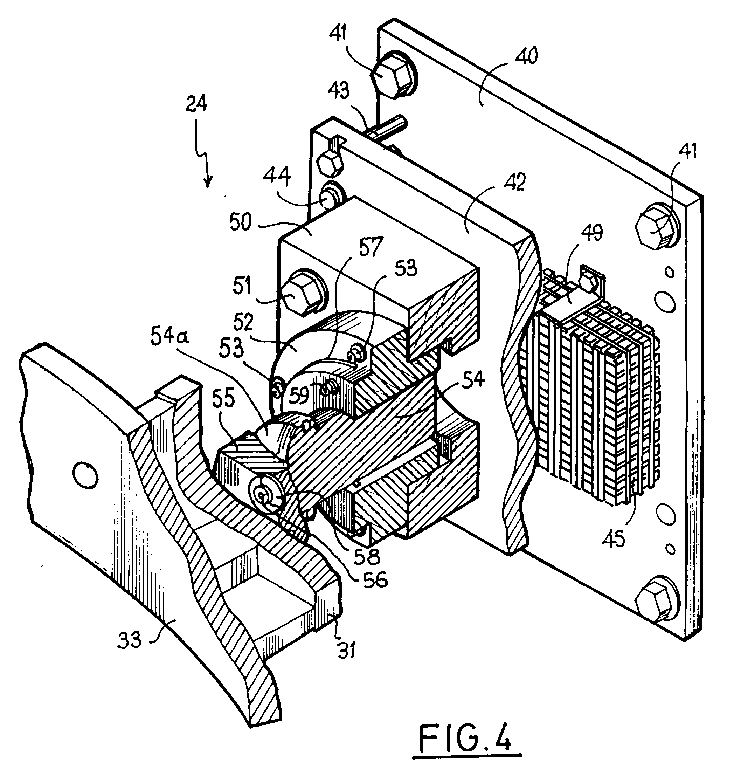

Le maintien transversal de la partie inférieure du générateur de vapeur 21 est assuré par un ensemble de sept dispositifs de maintien réglables identiques qui seront décrits plus en détail en se référant aux figures 3 et 4.

Les dispositifs de maintien transversal réglables suivant l'invention seront décrits en se reportant aux figures 3 et 4, par référence au dispositif de maintien latéral 24. Cependant, il doit être compris que la description qui va suivre est applicable à l'ensemble des dispositifs de maintien constituant les butées latérales et frontales représentées sur la figure 2.

Le dispositif de maintien transversal désigné de manière générale par le repère 24 est fixé sur une structure de support 25 plane fixée par l'intermédiaire de tirants de scellement 26 sur la paroi 20b de la casemate du générateur de vapeur 21.

L'ensemble de support 25 comporte une plaque métallique externe rapportée contre une plaque plane en béton, l'ensemble constituant le bloc de support étant lui-même scellé par les tirants 26 dans la paroi 20b.

Le dispositif de maintien transversal 24 comporte une première semelle 40 fixée par des vis 41 sur la plaque métallique constituant la partie externe de l'ensemble de support 25.

Le dispositif 24 comporte également une seconde semelle 42 qui est reliée, par l'intermédiaire de vis 43, à la première semelle 40.

Une structure déformable d'absorption d'énergie 45 est intercalée entre les semelles 40 et 42.

Les vis d'assemblage 43 sont engagées avec un certain jeu dans des trous lisses de la plaque 42 sur laquelle elles viennent en appui par les têtes de vis et vissées à l'intérieur de trous taraudés dans la plaque 40.

De plus des colonnes de guidage 44 sont fixées sur la plaque 40 à l'une de leurs extrémités et engagées à glissement dans des manchons fixés à l'intérieur d'ouvertures traversant la plaque 42.

Les vis 43 et les colonnes 44 permettent de maintenir la semelle 42 contre l'ensemble déformable 45 et de guider la plaque 42 qui est susceptible de se déplacer dans la direction transversale 47 constituant la direction axiale de la butée 24 lors d'une mise en appui du générateur de vapeur 21 contre la butée 24 pouvant se traduire par une déformation de l'ensemble 45.

L'ensemble déformable 45 est maintenu sur la semelle 40, par l'intermédiaire de pattes 49 fixées par des vis. L'ensemble 45 est réalisé sous la forme d'un coussin élastoplastique de forme parallélépipédique constitué par des barres métalliques croisées disposées suivant plusieurs couches, dans des directions à 90° les unes par rapport aux autres et en quinconce.

Un tel ensemble déformable à barres croisées est connu de la technique antérieure et utilisé pour absorber par déformation l'énergie transmise à des butées frontales, situées dans l'axe de la branche chaude, d'un générateur de vapeur.

Sur la face externe de la seconde semelle 42 dirigée vers le générateur de vapeur 21 est fixé un bloc de répartition de charge 50 de forme parallélépipédique et comportant une ouverture centrale cylindrique, par l'intermédiaire de vis 51.

L'ouverture centrale 50a du bloc de répartition 50 comporte une partie élargie diamétralement 50b dans laquelle est engagée une partie d'un écrou 52, de manière que l'ouverture taraudée 52a de l'écrou 52 soit disposée suivant l'axe 47 ayant pour direction la direction transversale de déplacement de la butée. L'écrou 52 est fixé par des vis 53 sur le bloc de répartition 50.

Une vis 54 est engagée par vissage dans l'ouverture taraudée 52a de l'écrou 52.

La vis 54 comporte une tête 54a ayant une partie en forme de calotte sphérique sur laquelle est rapporté un patin d'appui 55 ayant une cavité interne 55a en forme de calotte sphérique venant en contact avec la surface de la partie terminale 54a de la vis.

Le patin d'appui 55 est fixé sur la partie d'extrémité de la vis 54, par l'intermédiaire d'une vis de fixation 56 et d'une rondelle élastique 58, de telle sorte que le patin 55 ait une légère latitude d'orientation par rapport à la vis 54.

Le patin d'appui 55 est disposé en vis-à-vis de la surface du bloc d'appui ou sabot 31 fixé sur l'enveloppe du générateur de vapeur par l'intermédiaire de la semelle cylindrique 33.

L'écrou 52 comporte une fente 57 dans un plan perpendiculaire à l'axe 47 de l'écrou, la fente 57 débouchant dans l'alésage taraudé 52a de l'écrou 52 et ayant une extension circonférentielle légèrement supérieure à la demi-circonférence de l'écrou.

La fente 57 qui est disposée à une faible distance de la face externe de l'écrou 52 délimite une partie déformable 52b de l'écrou 52 qui peut être rapprochée de la partie restante de l'écrou par des vis de serrage telles que 59.

La partie déformable de l'écrou comporte une partie de l'ouverture taraudée 52a de l'écrou, de sorte que cette partie taraudée peut être déplacée par serrage des vis 59 de manière à réaliser un blocage de la vis 54 dans une position axiale déterminée à l'intérieur de l'ouverture taraudée 52a.

La vis 54 qui peut être déplacée par vissage dans un sens ou dans l'autre à l'intérieur de l'écrou 52, lorsque les vis de serrage 59 sont en position desserrée constitue une vis-vérin dont la position dans la direction axiale peut être fixée par serrage des vis 59.

Lors des essais à chaud du générateur de vapeur 21, il est ainsi possible de fixer la position de la surface d'appui du patin 55 par rapport à la surface externe du bloc d'appui ou sabot 31.

Par exemple, la vis 54 peut être placée dans une position telle qu'un jeu 60 soit réservé entre la surface d'appui du patin 55 et la surface externe du sabot 31. Le jeu 60 est déterminé en fonction des déplacements d'origine thermique du générateur de vapeur qui peuvent être calculés.

La position de la vis permettant d'obtenir le jeu 60 est fixée par serrage des vis 59.

On va maintenant décrire une opération de réglage des butées d'un ensemble de maintien transversal de la partie inférieure d'un générateur de vapeur, ces butées étant constituées par des dispositifs de maintien selon l'invention tels que représentés sur les figures 3 et 4.

Le maintien transversal du générateur de vapeur est assuré par quatre butées latérales et trois butées frontales disposées comme représenté sur la figure 2.

Le réglage est effectué au cours des essais à chaud du réacteur nucléaire, l'eau de refroidissement du réacteur nucléaire circulant dans le générateur de vapeur étant à une température de 286°C et à une pression de 155 bars.

Les vis 54 de l'ensemble des butées sont amenées par dévissage dans une position telle que le patin d'appui solidaire de l'extrémité de la vis vienne au contact du sabot correspondant fixé sur l'enveloppe du générateur de vapeur, à la hauteur de la plaque tubulaire.

Les vis 54 des butées 22 et 22' disposées du côté de la branche intermédiaire du circuit primaire et du groupe motopompe sont bloquées en position par serrage des vis 59, de manière à conserver la position entraînant un jeu nul à la température et dans les conditions de service du générateur de vapeur.

Les butées latérales 24 et 24' situées à l'opposé des butées 22 et 22' par rapport au plan 23 sont déplacées, de manière à introduire un certain jeu entre leur patin d'appui et les sabots 31 et 31' correspondants fixés sur l'enveloppe du générateur de vapeur. Pour celà, les vis 54 des butées 24 et 24' sont déplacées dans la direction axiale, par vissage d'un nombre de tours correspondant au jeu voulu. Les vis 54 sont alors bloquées en position par serrage des vis 59 assurant la déformation de l'écrou.

Le jeu entre les butées 24 et 24' et les parties d'appui du générateur de vapeur est prévu pour permettre des déplacements d'origine thermique ou accidentelle du générateur de vapeur entre les butées latérales qui assurent son guidage.

Les butées frontales 28, 28' et 28'' sont réglées, par l'intermédiaire de leurs vis 54, de manière qu'un jeu 61 (figure 2) relativement important soit maintenu entre le patin d'appui de la butée et le sabot correspondant 32, 32', 32''. Le jeu 61 peut être de l'ordre de 50 mm, de manière à permettre des déplacements importants du générateur de vapeur dans l'axe de la branche chaude correspondant à la trace du plan 23 sur la figure 2.

Le réglage de l'ensemble du dispositif de maintien transversal de la partie inférieure du générateur de vapeur est assuré par réglage d'un ensemble de sept butées, chacune des butées étant réglée à partir d'une vis placée dans la position axiale voulue puis bloquée en position.

Ces opérations qui sont réalisées pendant les essais à chaud du réacteur nucléaire sont réalisées beaucoup plus facilement et plus rapidement que les opérations de réglage suivant l'art antérieur qui nécessitaient des mesures et l'usinage et la pose de cales.

En outre, le réglage des jeux peut être réalisé de manière très précise, la position de la vis-vérin pouvant être fixée avec une très grande précision en comptant le nombre de tours ou de fractions de tour nécessaire dans le sens du vissage, à partir de la position de référence correspondant à la mise en contact du patin d'appui avec le sabot solidaire de l'enveloppe du générateur de vapeur.

La simplicité des opérations et la réduction du temps nécessaire pour le réglage constituent des avantages très importants, en particulier dans le cas d'un changement de générateur de vapeur.

L'invention ne se limite pas au mode de réalisation qui a été décrit.

C'est ainsi que le moyen de blocage de la vis dans sa position de réglage peut être réalisé par des moyens différents de vis de serrage d'une partie déformable de l'écrou.

Ces moyens de blocage peuvent être constitués, de manière plus classique par un contre-écrou, un contre-écrou fendu, ou par des vis de pression.

Le patin d'appui de la butée et les blocs d'appui solidaires du générateur de vapeur peuvent avoir des formes différentes de celles qui ont été décrites.

La seconde semelle de la butée sur laquelle est fixé l'écrou pourrait être fixée directement sur une paroi fixe en béton au lieu d'être rapportée sur une première semelle avec intercalation d'un élément déformable.

La butée selon le mode de réalisation qui a été décrit présente l'avantage de comporter un ensemble constitué par le patin d'appui, la vis, l'écrou, le bloc de répartition et la seconde semelle qui est susceptible de se déplacer suivant la direction axiale de la butée en étant parfaitement guidé par les colonnes solidaires de la première semelle.

Dans le cas d'un déplacement de la butée sous l'effet d'une déformation ou d'un déplacement du générateur de vapeur, l'ensemble mobile de la butée reste parfaitement aligné suivant la direction axiale, malgré une déformation qui peut être irréversible de l'ensemble déformable 45 qui assure l'absorption d'une partie de l'énergie mise en jeu lors du déplacement du générateur de vapeur.

L'ensemble déformable peut être d'un type différent de celui qui a été décrit qui comporte des couches successives de barres croisées.

L'invention s'applique au maintien transversal de tout composant de grandes dimensions d'un réacteur nucléaire disposé dans un local et susceptible de se déplacer par rapport aux parois du local, par effet thermique ou pour des causes accidentelles telles qu'un séisme.

## Revendications

1. Dispositif de maintien transversal d'un composant (1) de grandes dimensions d'un réacteur nucléaire, tel qu'un générateur de vapeur d'un réacteur nucléaire à eau sous pression, disposé dans une structure fixe (20) en béton ayant des parois verticales (20a, 20b, 20c) entourant le composant (1), comportant au moins une semelle (40) conçue pour être fixée sur une paroi de la structure en béton (20) et un élément d'appui (55) porté par la semelle (40) et pouvant être disposé au contact ou à proximité d'une surface d'appui du composant (1), caractérisé en ce qu'il comporte un ensemble de réglage et de positionnement de l'élément d'appui constitué par :
- un écrou (52) porté par la semelle (40) traversé suivant son axe (47) par une ouverture taraudée,
- une vis-vérin (54) en prise avec l'écrou et disposée dans la direction axiale de l'écrou (52), et
- un moyen de blocage (57, 59) de la vis (54) par rapport à l'écrou (52), dans une position déterminée de la vis (54) dans la direction axiale (47),
l'élément d'appui (55) étant constitué par un patin porté par une extrémité de la vis (54) dirigée vers la surface d'appui (31) du composant (21).

2. Dispositif suivant la revendication 1, caractérisé par le fait que l'écrou (52) comporte une fente (57) dans un plan perpendiculaire à son axe (47) débouchant dans l'alésage taraudé (52a) de l'écrou (52) et que le moyen de blocage (59) de la vis-vérin (54) par rapport à l'écrou (52) est constitué par au moins une vis de serrage engagée dans un trou taraudé à l'intérieur de l'écrou (52) et venant en appui sur une partie déformable (52b) de l'écrou (52) délimitée par la fente (57) et comportant une partie de l'ouverture taraudée (52a) de l'écrou (52).

3. Dispositif suivant l'une quelconque des revendications 1 et 2, caractérisé par le fait qu'il comporte une première semelle plane (40) constituant la semelle fixée sur la paroi (20b) de la structure fixe en béton, une seconde semelle plane (42) placée parallèlement et reliée à la première semelle (40), un élément déformable par compression (45) intercalé entre la première semelle (40) et la seconde semelle (42), l'écrou (52) étant fixé sur la seconde semelle (42), de manière que la vis-vérin (54), l'écrou (52) et la seconde semelle (42) constituent un ensemble qui peut être déplacé dans la direction axiale (47) par rapport à la première semelle (40) sous l'effet d'une sollicitation entraînant une déformation de l'ensemble déformable (45).

4. Dispositif suivant la revendication 3, caractérisé par le fait que la seconde semelle (42) est reliée à la première semelle (40) par l'intermédiaire de vis fixées dans des trous taraudés de la première semelle (40), engagées librement dans des ouvertures traversant la seconde semelle et en appui par une partie d'extrémité sur la face de la seconde semelle dirigée vers le composant (21).

5. Dispositif suivant la revendication 4, caractérisé par le fait qu'il comporte de plus au moins trois colonnes de guidage (44) fixées sur la première semelle (40) et engagées dans des ouvertures de la seconde semelle (42), assurant le guidage de la seconde semelle (42), de l'écrou et de la vis (54) dans la direction axiale (47).

6. Dispositif suivant l'une quelconque des revendications 3, 4 et 5, caractérisé par le fait que l'écrou (52) est fixé sur la seconde semelle (42), par l'intermédiaire d'un bloc de répartition de charge (50).

7. Dispositif suivant l'une quelconque des revendications 1 à 6, caractérisé par le fait que la vis (54) comporte une partie d'extrémité (54a) dirigée vers la surface d'appui du composant (21) ayant une surface en forme de calotte sphérique convexe et que le patin (55) qui comporte une cavité en forme de calotte sphérique (55a) destinée à venir en appui sur l'extrémité de la vis en forme de calotte sphérique est relié à la vis, par l'intermédiaire d'un moyen de liaison élastique permettant une certaine adaptation de l'orientation du patin par rapport à l'axe (47) de la vis.

8. Ensemble de maintien transversal de la partie inférieure d'un générateur de vapeur (21) relié par une première canalisation ou branche chaude à la cuve du réacteur nucléaire et par une seconde canalisation à une pompe primaire du réacteur, caractérisé par le fait qu'il comporte deux paires de butées latérales (22, 22', 24, 24') disposées de manière à pouvoir être situées, lorsque l'ensemble de maintien est en position opératoire, dans des positions sensiblement symétriques de part et d'autre d'un plan vertical (23) passant par l'axe de la branche chaude et trois butées frontales (28, 28', 28'') disposées de manière à pouvoir être situées, lorsque l'ensemble de maintien est en position opératoire, au voisinage du plan vertical (23) passant par l'axe de la branche chaude, à l'opposé de la zone de raccordement entre la branche chaude et le générateur de vapeur,
les butées latérales (22, 22', 24, 24') et les butées frontales (28, 28', 28'') étant constituées chacune par un dispositif de maintien transversal selon l'une quelconque des revendications 1 à 6.

9. Procédé de réglage d'un ensemble de maintien transversal d'un générateur de vapeur selon la revendication 8, caractérisé par le fait que, lors des essais à chaud du réacteur nucléaire, le générateur de vapeur (21) étant à sa température de service, on met en contact les patins d'appui (55) de chacune des butées (22, 22', 24, 24', 28, 28', 28'') avec la partie de la surface d'appui correspondante (30, 30', 31, 31', 32, 32', 32'') du générateur de vapeur (21) par dévissage de la vis (54) correspondante, qu'on bloque en position les vis-vérin (54) des butées latérales (22, 22') disposées d'un côté du plan vertical (23) passant par l'axe de la branche chaude et que pour l'autre paire de butées latérales (24, 24') disposées de l'autre côté du plan vertical (23) passant par l'axe de la branche chaude et pour les butées frontales (32, 32', 32''), on déplace dans la direction axiale la vis (54), par vissage, d'une distance déterminée correspondant à un jeu (60, 61) entre le patin d'appui (55) de la butée et la partie correspondante de la surface d'appui du générateur de vapeur, pour permettre un déplacement guidé du générateur de vapeur par effet thermique en service ou pour des causes accidentelles, entre les butées.

## Patentansprüche

1. Vorrichtung zur seitlichen Halterung einer Komponente (1) von großen Abmessungen eines Kernreaktors, wie beispielsweise eines Dampfgenerators eines Druckwasserkernreaktors, die in einer festen Struktur (20) aus Beton angeordnet ist, die vertikale Seitenwände (20a, 20b, 20c) aufweist, die die Komponente (1) umgeben, mit wenigstens einer Sohle (40), die gebildet ist, um an einer Seitenwand der Betonstruktur (20) befestigt zu sein, und einem Anlage- bzw. Andruckelement (55), das von der Sohle (40) getragen wird und in Berührung oder in der Nähe einer Anschlagoberfläche der Komponente (1) angeordnet sein kann, dadurch gekennzeichnet, daß sie eine Anordnung der Regelung und Positionierung des Anlageelements aufweist, das gebildet ist durch
- eine Mutter (52), die von der Sohle (40) getragen wird, wobei sie entlang ihrer Achse (47) von einer Gewindeöffnung durchsetzt ist,
- einen Schrauben-Stelltrieb (54), der in Eingriff mit der Mutter steht und in axialer Richtung der Mutter (52) angeordnet ist, und
- einer Blockierungseinrichtung (57, 59) der Schraube (54) bezüglich der Mutter (52), in einer vorbestimmten Position der Schraube (54) in axialer Richtung (47),
wobei das Anlage- oder Anschlagelement (55) durch ein Tragsegment gebildet wird, das durch ein Ende der Schraube (54) getragen wird, gerichtet zur Anschlagoberfläche (31) der Komponente (21).

2. Vorrichtung nach Anspruch 1, dadurch gekennzeichnet, daß die Mutter (52) einen Schlitz (57) in einer Ebene senkrecht zu ihrer Achse (47) aufweist, der in der Gewindeausnehmung (52a) der Mutter (52) mündet, und daß die Blockierungseinrichtung (59) des Schrauben-Stelltriebs (54) bezüglich der Mutter (52) durch wenigstens eine Klemmschraube gebildet wird, die in einem Gewindeloch im Inneren der Mutter (52) eingreift und in Anschlag auf einen verformbaren Abschnitt (52b) der Mutter (52) kommt, der von dem Schlitz (57) begrenzt wird und einen Abschnitt der Gewindeöffnung (52a) der Mutter (52) aufweist.

3. Vorrichtung nach Anspruch 1 oder 2, dadurch gekennzeichnet, daß sie eine erste ebene Sohle (40), die die Sohle bildet, die an der Seitenwand (20b) der festen Struktur aus Beton befestigt ist, eine zweite ebene Sohle (42), die parallel und verbunden mit der ersten Sohle (40) angeordnet ist, ein durch Druck verformbares Element (45) aufweist, das zwischen der ersten Sohle (40) und der zweiten Sohle (42) eingeklemmt ist, wobei die Mutter (52) auf der zweiten Sohle (42) befestigt ist, derart, daß der Schrauben-Stelltrieb (54), die Mutter (52) und die zweite Sohle (42) eine Anordnung bilden, die in axialer Richtung (47) bezüglich der ersten Sohle (40) unter dem Effekt einer Belastung bewegt werden kann, die eine Verformung der verformbaren Anordnung (45) erzeugt.

4. Vorrichtung nach Anspruch 3, dadurch gekennzeichnet, daß die zweite Sohle (42) mit der ersten Sohle (40) mittels Schrauben verbunden ist, die in Gewindelöchern der ersten Sohle (40) befestigt sind, wobei sie frei in Öffnungen eingreifen, die die zweite Sohle durchqueren und in Anlage durch einen Endabschnitt auf der Seite der zweiten Sohle sind, die zur Komponente (21) hingerichtet ist.

5. Vorrichtung nach Anspruch 4, dadurch gekennzeichnet, daß sie darüberhinaus wenigstens drei Führungssäulen (44) aufweist, die an der ersten Sohle (40) befestigt sind und in Öffnungen der zweiten Sohle (42) eingreifen, wobei sie die Führung der zweiten Sohle (42), der Mutter und der Schraube (54) in axialer Richtung (47) sicherstellen.

6. Vorrichtung nach einem der Ansprüche 3, 4, oder 5, dadurch gekennzeichnet, daß die Mutter (52) an der zweiten Sohle (42) mittels eines Lastverteilungsblocks (50) befestigt ist.

7. Vorrichtung nach einem der Ansprüche 1 bis 6, dadurch gekennzeichnet, daß die Schraube (54) einen Endabschnitt (54a) aufweist, der zur Anschlagoberfläche der Komponente (21) hin gerichtet ist, wobei er eine Oberfläche in Form einer kugelförmigen konvexen Haube aufweist, und daß das Tragsegment (55), das eine Vertiefung in Form einer kugelförmigen Haube (55a) aufweist, die dazu dient, in Anlage auf das Ende der Schraube in Form einer kugelförmigen Haube zu kommen, mit der Schraube verbunden ist, mittels einer elastischen Verbindungseinrichtung, die eine gewisse Anpassung der Ausrichtung des Tragsegments bezüglich der Achse (47) der Schraube ermöglicht.

8. Seitliche Halteanordnung des unteren Abschnitts eines Dampfgenerators (21), verbunden durch eine erste heiße Leitung oder einen ersten heißen Arm mit dem Behälter des Kernreaktors und durch eine zweite Leitung, die mit einer Primärpumpe des Reaktors verbunden ist, dadurch gekennzeichnet, daß sie zwei seitlichen Anschlagpaare (22, 22', 24, 24') aufweist, die derart angeordnet sind, daß sie, wenn die Halteanordnung sich in Betriebsstellung befindet, sich in Positionen befinden können, die im wesentlichen symmetrisch beiderseits einer vertikalen Ebene (23) sind, die durch die Achse des heißen Armes geht, und drei Frontanschläge (28, 28', 28'') aufweist, die derart angeordnet sind, daß sie, wenn die Halteanordnung sich in Betriebsstellung befindet, sich in der Nähe der vertikalen Ebene (23) befinden können, die durch die Achse des heißen Armes geht, entgegengesetzt zur Verbindungszone zwischen dem heißen Arm und dem Dampfgenerator, wobei die seitlichen Anschläge (22, 22', 24, 24') und die Frontanschläge (28, 28', 28") jeweils durch eine seitliche Haltevorrichtung nach einem der Ansprüche 1 bis 6 gebildet werden.

9. Verfahren zum Einstellen der seitlichen Halteanordnung eines Dampferzeugers nach Anspruch 8, dadurch gekennzeichnet, daß bei Heißversuchen des Kernreaktors, sich der Dampfgenerator (21) bei seiner Betriebstemperatur befindet, die Anschlagtragsegmente (55) in Kontakt mit einem jeden der Anschläge (22, 22', 24, 24', 28, 28', 28") mit dem entsprechenden Anschlagoberflächenbereich (30, 30', 31, 31', 32, 32', 32") des Dampfgenerators (21) gebracht werden, durch Lösen der entsprechenden Schraube (54), daß die Schraubenstelltriebe (54) der seitlichen Anschläge (22, 22'), die auf einer Seite der vertikalen Ebene (23) angeordnet sind, die durch die Achse des heißen Armes verläuft, in ihrer Stellung blockiert werden, und daß für das andere Paar der seitlichen Anschläge (24, 24'), die auf der anderen Seite der vertikalen Ebene (23) angeordnet sind, die durch die Achse des heißen Armes verläuft und für die Frontanschläge (32, 32', 32"), in der axialen Richtung die Schraube (54), durch Schrauben, um eine vorbestimmte Strecke bewegt wird, die einem spiel (60, 61) zwischen dem Anschlagtragsegment (55) des Anschlags und dem entsprechenden Bereich der Anschlagoberfläche des Dampfgenerators entspricht, um eine geführte Bewegung des Dampfgenerators durch thermischen Effekt, im Betrieb oder für Unfallursachen, zwischen den Anschlägen zu ermöglichen.

## Claims

1. Device for laterally supporting a large component (1) of a nuclear reactor, such as a steam generator of a pressurised watcr nuclear reactor, disposed in a fixed concrete structure (20) having vertical walls (20a, 20b, 20c), surrounding the component (1), comprising at least one bearing plate (40), designed to be secured on a wall of the concrete structure (20), and a bearing element (55) which is supported by the plate (40) and may be disposed in contact with or in the vicinity of a bearing surface of the component (1), characterised in that it comprises an assembly for adjusting and positioning the bearing element, consisting of:
- a nut (52) supported by the bearing plate (40) through which there passes, along its axis (47), a threaded aperture;
- a screw jack (54) engaged with the screw and arranged in the axial direction of the screw (52); and
- a means of blocking (57, 59) the screw (54) in relation to the nut (52), in a predetermined position of the screw (54) in the axial direction (47);
the bearing element (55) being formed of a runner which is supported by one end of the screw (54) directed towards the bearing surface (31) of the component (21).

2. Device according to Claim 1, characterised by the fact that the nut (52) comprises a slit (57) in a plane which is perpendicular to the axis (47) thereof, opening out into a threaded bore (52a) of the nut (52), and in that the means of blocking (59) the screw jack (54) in relation to the nut (52) is formed of at least one clamping screw engaged in a threaded hole inside the nut (52) and coming to bear on a deformable part (52b) of the nut (52) delimited by the slit (57) and comprising one part of the threaded aperture (52a) of the nut (52).

3. Device according to either one of Claims 1 and 2, characterised by the fact that it comprises a first flat bearing plate (40) forming the bearing plate secured on the wall (20b) of the structure secured in concrete, a second flat bearing plate (42) located parallel and connected to the first bearing plate (40), an element which can be deformed by compression (45) intercalated between the first bearing plate (40) and the second bearing plate (42), the screw being secured on the second bearing plate (42) in such a manner that the screw jack (54), the nut (52) and the second bearing plate (42) form an assembly which may be displaced in the axial direction (47) in relation to the first bearing plate (40) under the effect of a stress involving a deformation of the deformable assembly (45).

4. Device according to Claim 3, characterised in that the second bearing plate (42) is connected to the first bearing plate (40) by means of screws secured in threaded holes of the first bearing plate (40), engaged freely in the apertures passing through the second bearing plate and bearing with one end part on the face of the second bearing plate directed towards the component (21).

5. Device according to Claim 4, characterised by the fact that it comprises approximately three guide columns (44) secured on the first bearing plate (40) and engaged in the apertures of the second bearing plate (42), performing the guiding of the second bearing plate (42), the nut and the screw (54) in the axial direction (47).

6. Device according to any one of Claims 3, 4 and 5, characterised by the fact that the nut (52) is secured on the second bearing plate (42) by means of a load distribution block (50).

7. Device according to any one of Claims 1 to 6, characterised in that the screw (54) comprises an end part (54a) directed towards the bearing surface of the component (21) having a surface in the form of a convex spherical cap and in that the runner (55) which comprises a cavity in the form of a spherical cap (55a) intended to come to bear on the end of the screw in the form of a spherical cap is connected to the screw, by means of a resilient connection permitting a certain adaptation of the direction of the runner in relation to the axis (47) of the screw.

8. Assembly for laterally transporting the lower part of the steam generator (21) connected by a first duct or hot branch to the nuclear reactor vessel and by a second duct to a primary pump of the reactor, characterised by the fact that it comprises two pairs of lateral abutments (22, 22', 24, 24') arranged in such a manner that they can be located, when the retaining assembly is in the operative position, in positions which are substantially symmetrical on either side of a vertical plane (23) passing through the axis of the hot branch and three front-mounted abutments (28, 28', 28") arranged in such a manner that they can be situated, when the maintaining assembly is in the operative position, in the vicinity of the vertical plane (23) passing through the hot branch, opposite the connection zone between the hot branch and the steam generator, the lateral abutments (22, 22', 24, 24') and the front-mounted abutments (28, 28', 28") each consisting of a transverse retaining device according to any one of Claims 1 to 6.

9. Process of regulating an assembly for laterally retaining a steam generator according to Claim 8, characterised by the fact that during the heat tests of the nuclear reactor, the steam generator (21) being at its operating temperature, the bearing runners (55) of each of the abutment stops (20, 22', 24, 24', 28, 28', 28") are brought into contact with the part of the corresponding bearing surface (30, 30', 31, 31', 32, 32', 32") of the steam generator (21) by unscrewing the corresponding screw (54), which blocks in position the screw jack (54) of the lateral abutments (22, 22') disposed on one side of the vertical plane (23) passing through the axis of the hot branch and that of the other pair of lateral abutments (24, 24') located on the other side of the vertical plane (23) passing through the axis of the hot branch and, for the front-mounted abutments (32, 32', 32"), the screw (54) is displaced, by screwing, in the axial direction by a predetermined distance corresponding to a play (60, 61) between the bearing runner (55) of the abutment and the corresponding part of the bearing surface of the steam generator, to permit a guided displacement of the steam generator by the thermal effect in operation or as a result of accidental causes, between the abutment stops.
